# EUROPÄISCHE PATENTSCHRIFT

(11) **EP 1 369 298 B1**
(45) Veröffentlichungstag und Bekanntmachung des Hinweises auf die Patenterteilung: **11.03.2009**
(21) Anmeldenummer: 03007850.5
(22) Anmeldetag: 05.04.2003
(51) Int. Cl.: B60N 3/10

(54) **Halter für einen Getränkebehälter**
Holder for a beverage container
Support pour un récipient de boisson

(30) Priorität: 06.06.2002 DE 10225068
(43) Veröffentlichungstag der Anmeldung: 10.12.2003
(73) Patentinhaber: fischer automotive systems GmbH & Co. KG, 72160 Horb (DE)
(72) Erfinder: Pacher, Thomas, 72280 Dornstetten (DE); Schäuffele, Rolf, 72184 Eutingen (DE); Bastian, Ulf-Lothar, 72178 Waldachtal (DE); Benz, Wolf-Dieter, 72296 Schopfloch (DE)

(56) Entgegenhaltungen:
- EP-A2- 1 084 904
- DE-C1- 19 519 602
- JP-A- 2000 016 139

## Beschreibung

Die Erfindung betrifft einen Halter für einen Getränkebehälter mit den Merkmalen des Oberbegriffs des Anspruchs 1.

Aus dem Stand der Technik sind eine Vielzahl derartiger Halter mit einer topfförmigen Behälteraufnahme für Tassen, Becher, Getränkedosen, Flaschen oder dgl. bekannt. Die bekannten Halter weisen zumeist ein oder mehrere, zum Teil über den Umfang verteilt angeordnete Haltebacken oder dgl. auf. Diese ragen in das Innere des topfförmigen Behälteraufnahme hinein und weisen schräge und/oder gerundete Gleitflächen auf. Aufgrund einer Federung können die Haltebacken von der Umfangsfläche eines Getränkebehälters radial weggedrückt werden und geben durch Klemmung dem Getränkebehälter Halt. Ein derartiger Halter ist beispielsweise in DE 296 06 583.8 beschrieben. Die entsprechende Klemmeinrichtung weist Haltebacken auf, die jeweils einzeln mit einem Schwenk- und Linearlager am Getränkehalter befestigt sind. Als Federelement wird ein elastischer Kreisring oder ein Band vorgeschlagen, das die Behälteraufnahme umgreift. Derartige Halter haben den Nachteil, dass sie hohen Getränkebehältern, wie z. B. Flaschen, teilweise nur unzureichend Halt geben, da die Klemmung nur im unteren Bereich des Getränkebehälters ansetzt. Darüber hinaus ist das Klemmen taillierter Flaschen meist nicht möglich. Entweder setzen die Haltebacken knapp über der Taille an und schieben den Getränkebehälter nach oben, oder die Haltebacken setzen oberhalb des weitesten Durchmessers an, wodurch es zu einer zu starken Verklemmung kommt.

Darüber hinaus sind beispielsweise aus DE 199 26 003.6 Haltevorrichtungen bekannt, die eine Schiebeführung aufweisen, in welcher ein Schlitten schubladenartig aus einer eingeschobenen in eine ausgezogenen Stellung verschiebbar geführt sind. Sämtliche Elemente des Halters, insbesondere die Behälteraufnahme und die Klemmeinrichtung, sind in der eingeschobenen Stellung derart gegenüber der ausgeschobenen Stellung verschwenkt und gekippt, dass sie in den flachen Bauraum der Schublade geführt werden können. Entsprechend sind die Elemente gegenüber den oben beschriebenen Haltern deutlich einfacher. In der ausgezogenen Stellung ist ein Getränkebehälter auf den Schlitten stellbar und wird lediglich durch eine nach unten schwenkbare Ausgleichsklappe geklemmt. Eine derartige Klemmung weist die gleichen Probleme auf, wie die zuvor beschriebenen Klemmeinrichtungen.

Aus der Druckschrift JP 2000016139 ist ebenfalls eine Haltevorrichtung bekannt, die eine Schiebeführung aufweist, in der ein Schlitten schubladenartig aus einer eingeschobenen in eine ausgezogene Stellung verschiebbar ist. Im Gegensatz zu dem aus der Druckschrift DE 199 26 003.6 bekannten Halter weist dieser Halter zwei Klemmeinrichtungen auf, die in der ausgeschobenen Stellung die Behälteraufnahme bilden. Die Klemmeinrichtungen sind über einen in einer Nut geführten Stift derart miteinander verbunden, dass die Verschwenkung in der ausgeschobenen Stellung durch einen Anschlag begrenzt wird.

Der Erfindung liegt die Aufgabe zugrunde, einen Halter für einen Getränkebehälter zu schaffen, der insbesondere auch hohen und taillierten Getränkebehältern sicheren Halt gibt und für schubladenartige Haltevorrichtungen geeignet ist.

Diese Aufgabe wird erfingdungsgemäß durch die Merkmale des Anspruchs 1 gelöst. Die Erfindung sieht vor, dass der Getränkebehälter oberhalb der Behälteraufnahme durch mindestens einen halbkreisförmigen Haltebügel geklemmt wird. Der Haltebügel ist im oberen Bereich der Behälteraufnahme an zwei radial gegenüberliegenden Gelenken des Umfangs angebracht, so dass die Schwenkachse senkrecht zur Symmetrieachse der Behälteraufnahme verläuft. Durch eine Feder wird ein Moment auf den Haltebügel gebracht, das ein Verschwenken des Haltebügels aus der Behälteraufnahme heraus bewirkt. Der Schwenkwinkel ist in beiden Richtungen durch Anschläge begrenzt. Die eine Schwenkwinkelbegrenzung ist so gewählt, dass die durch den Haltebügel beschriebene Ebene senkrecht zur Symmetrieachse der Behälteraufnahme steht. Der Haltebügel schmiegt sich in dieser Stellung flach an den Umfang der Behälteraufnahme an. Die andere Schwenkwinkelbegrenzung ist so gewählt, dass der Haltebügel in einer aus der Behälteraufnahme herausragenden Schwenkposition zum Stehen kommt, also beispielsweise zwischen 45° und 90° verschwenkt gegenüber dem erstgenannten Anschlag.

Zum Einstellen eines Getränkebehälters wird dieser von oben und/oder von der Seite an den Haltebügel geführt und der Haltebügel mindestens soweit entgegen der beschriebenen Federwirkung verschwenkt, bis der Getränkebehälter in die Behälteraufnahme einführbar ist. Der Behälter wird soweit eingeführt, bis er am Boden der Behälteraufnahme aufsitzt. In dieser Position wird er von dem Haltebügel an einer punkt- oder linienförmigen Klemmstelle oberhalb der Behälteraufnahme geklemmt. Durch das Klemmen oberhalb der Behälteraufnahme wirkt ein Biegemoment auf den Getränkebehälter, das an mindestens zwei gegenüberliegenden Punkten als Gegenlager innerhalb der Behälteraufnahme aufgenommen wird. Hierzu kann beispielsweise zusätzlich eine Vertiefung im Boden ausgeprägt sein.

Durch den erfindungsgemäßen Halter erfährt ein Getränkebehälter eine Klemmung oberhalb der Behälteraufnahme, was für hohe und/oder taillierte Getränkebehälter zu einem günstigeren Klemmverhalten gegenüber den bekannten Klemmeinrichtungen führt.

Der Halter weist zwei halbkreisförmige Haltebügel auf, wobei die Radien der Haltebügel unterschiedlich und die Gelenke versetzt am Umfang angeordnet sind. Durch die unterschiedlichen Radien kommt es zu keiner gegenseitigen Behinderung der Haltebügel. Durch die Anordnung zweier Haltebügel wird der Getränkebehälter an zwei Klemmstellen oberhalb der Behälteraufnahme geklemmt, wodurch gegenüber nur einem Haltebügel eine deutlich höhere Sicherheit gegen Verkippen gegeben ist. Bevorzugt sind die Gelenke um 90° zueinander versetzt.

Ist der Halter Teil einer schubladenartigen Haltevorrichtung für Getränkebehälter, müssen die Haltebügel beim Einschieben in die Schublade entgegen der Federwirkung verschwenkt werden, damit sie sich flach an die Behälteraufnahme anschmiegen. Die Behälteraufnahme wird in diesem Fall durch einen Haltering und den Schlitten als Boden gebildet. Der Schlitten kann dabei außerdem als Tropfschale dienen, möglich ist aber auch statt dessen ein gesonderter Bügel, der den Getränkebehälter unten abstützt und beim Einschieben des Schlittens in eine dem Bauraum der Schublade angepasste, flache Position verschwenkt wird. Auch der Haltering ist gelenkig am Schlitten befestigt und wird durch einen Steuerbügel beim Einschieben des Schlittens aus einer angehobenen Position in eine abgesenkte Position verschwenkt. Diese Schwenkbewegung wird dazu genutzt, die Haltebügel ebenfalls zu verschwenken. Die nach unten verschwenkenden freien Enden der Haltebügel stoßen beim Absenken des Halterings auf Steuerstifte, Nocken oder dgl., die am Schlitten angebracht sind. Dadurch wirkt ein der Federwirkung entgegengesetztes Moment, wodurch die Haltebügel in die flache Position verschwenkt werden.

Die Erfindung wird nachfolgend anhand eines in der Zeichnung dargestellten Ausführungsbeispiels näher erläutert. Es zeigen:
- Figur 1: den Halter in einer perspektivischen Darstellungen als Teil einer Haltevorrichtung sowie
- Figur 2: eine perspektivische Schnittdarstellung der Haltevorrichtung.

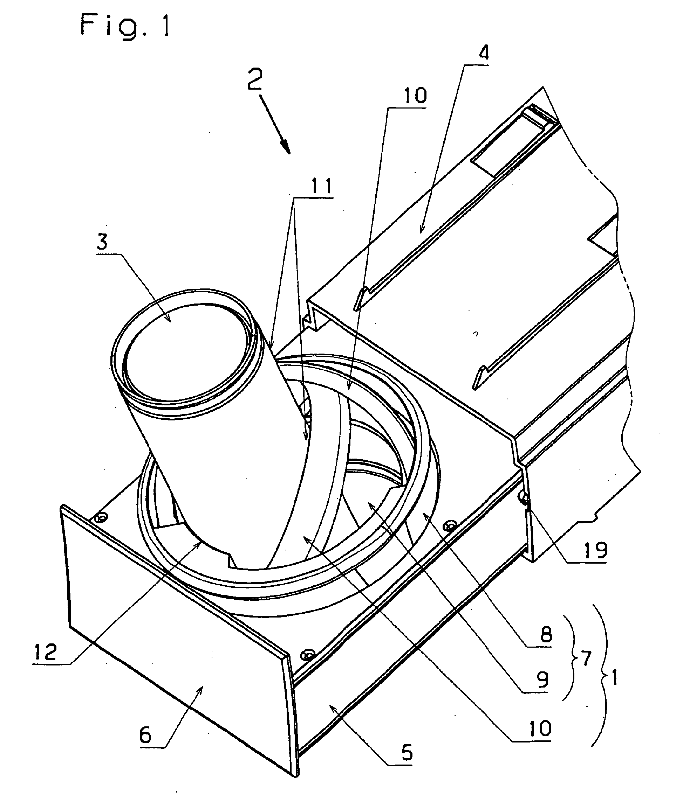

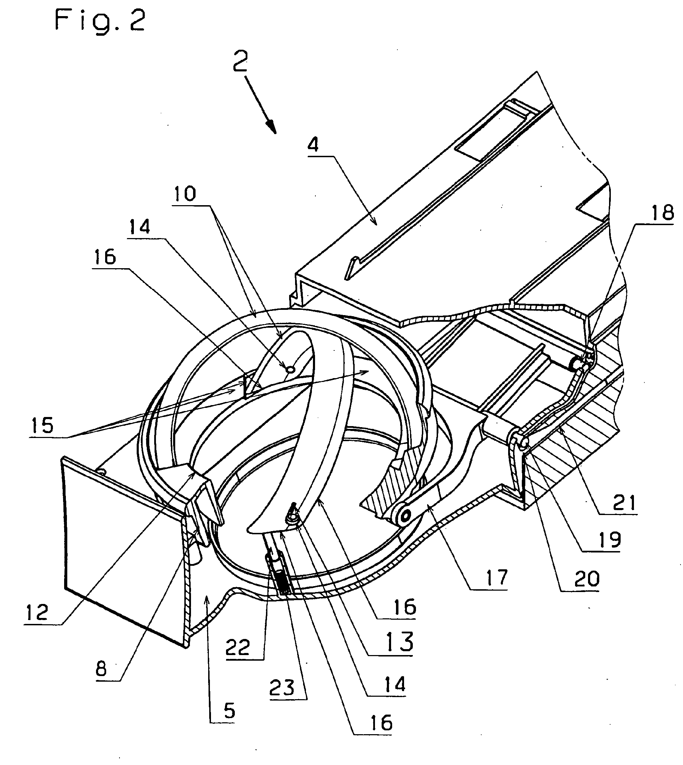

Der in Figur 1 dargestellte Halter 1 ist Teil einer schubladenartigen Haltevorrichtung 2 für den Einbau in ein Kraftfahrzeug und kann zum Halten von Getränkebehältern 3 wie beispielsweise Tassen, Becher, Getränkedosen, Flaschen oder dgl. verwendet werden. Die Haltevorrichtung 2 besteht im Wesentlichen aus dem Gehäuse 4 und dem Schlitten 5 mit der Blende 6 sowie dem Halter 1. Das Gehäuse 4 ist beispielsweise für den Einbau im Bereich des Cockpits eines Kraftfahrzeugs vorgesehen. Der Schlitten 5 kann durch Betätigung der Blende 6 in das Gehäuse 4 ein- und ausgefahren werden. Zum Arretieren und Lösen dient beispielsweise eine Push-Push-Verriegelung (nicht dargestellt). Der Halter 1 ist in den Schlitten 5 integriert. Er besteht aus einer Behälteraufnahme 7, die durch einen Haltering 8 und den Boden 9 des Schlittens 5 gebildet wird, sowie den beiden halbkreisförmigen Haltebügeln 10. In der gezeigten ausgefahrenen Stellung des Schlittens 5 ist der Haltering 8 gegenüber dem Schlitten 5 angehoben und leicht verschwenkt. Die Haltebügel 10 sind im oberen Bereich des Halterings um 90° versetzt jeweils an zwei radial gegenüberliegenden Gelenken 14 (siehe Figur 2) befestigt. Sie weisen unterschiedliche Radien auf und sind durch Federwirkung aus dem Haltering 8 so verschwenkt, dass sie den Getränkebehälter 3 an den Klemmstellen 11 klemmen. Als Gegenlager dient der Anschlag 12 des Halterings 8 sowie der Boden 9 des Schlittens 5. Diese Art der Klemmung bietet einen sehr guten Halt insbesondere für hohe und/oder taillierte Getränkebehälter 3.

Sofern kein Getränkebehälter 3 in den Halter 1 eingestellt ist, sind die Haltebügel 10 um weitere 5 bis 10° gegenüber dem Haltering 8 verschwenkt. Zum Einstellen eines Getränkebehälters 3 wird dieser von vorne und/oder oben gegen die Haltebügel 10 geführt. Mit "von vorne" ist die Richtung des Einschubs des Schlittens gemeint. Mit von "von oben" ist die Richtung senkrecht zur Ebene des Halterings 8 in Richtung Boden 9 gemeint. Die Haltebügel 10 werden soweit entgegen der Federwirkung verschwenkt, bis der Getränkebehälter 3 in den Haltering 8 eingeführt werden kann. Er wird soweit eingeführt, bis er auf dem Boden 9 des Schlittens 5 aufsitzt.

Figur 2 zeigt im Schnitt die wesentlichen Funktionselemente der Haltevorrichtung 2. Die Federwirkung der Haltebügel 10 wird durch Torsionsfedern 13 an mindestens je einem Gelenk 14 des jeweiligen Haltebügels 10 erzielt. Als Anschläge für das Verschwenken der Haltebügel 10 werden mehrere Absätze 15 im Haltering 8 sowie die Anschlagskanten 16 der Haltebügel 10 genutzt. Zum Einschwenken und Absenken des Halterings 8 in den Bauraum des Schlittens 5 wird der Haltering 8 durch den gelenkig angebrachten Steuerbügel 17 geführt. Der Steuerbügel 17 ist über einen Lagerzapfen 18 im Schlitten 5 gelenkig gelagert. Die Schwenkbewegung wird durch den Steuerzapfen 19 erreicht, der durch das Langloch 20 im Schlitten 5 ragt und durch die Führungsnut 21 im Gehäuse 4 geführt wird. Durch das Absenken des Halterings 8 in den Schlitten 5 wird über den Steuerstift 22 ein der Torsionsfeder 13 entgegengesetztes Moment auf den Haltebügel 10 ausgeübt. Der Steuerstift 22 wird durch eine am Schlitten 5 angebrachte Buchse geführt. Die Kraftübertragung zwischen dem Steuerstift 22 und dem gegenüber dem Haltering 8 feststehenden Schlitten 5 erfolgt über die Feder 23, so dass unabhängig von Fertigungstoleranzen ein Verschwenken des Haltebügels 10 bis zum Anschlag am Absatz 15 gewährleistet ist. Beide Haltebügel 10 werden auf diese Weise in den Haltering 8 verschwenkt und dieser wiederum in den Bauraum des Schlittens 5, so dass alle Elemente des Halters 1 in den flachen Bauraum des Gehäuses 4 eingeschoben werden können. Beim Ausschieben erfolgen die beschriebenen Bewegungen in umgekehrter Reihenfolge.

## Patentansprüche

1. Halter für einen Getränkebehälter (3), mit einer Behälteraufnahme (7) für den Getränkebehälter (3) und mit einer Klemmeinrichtung (10), wobei der Halter (1) mindestens zwei halbkreisförmige Haltebügel (10) aufweist, die im oberen Bereich der Behälteraufnahme (7) an je zwei radial gegenüberliegenden Gelenken (14) am Umfang angebracht sind und federnd schwenkbar gelagert sind, wobei die Federwirkung ein Verschwenken aus der Behälteraufnahme (7) heraus entgegen der Einstellrichtung des Getränkebehälters (3) bewirkt und der Verschwenkwinkel in beide Richtungen durch Anschläge (15) begrenzt ist, **dadurch gekennzeichnet, dass** die Radien der Haltebügel (10) sich unterscheiden und die Gelenke (14) versetzt am Umfang der Behälteraufnahme (7) angeordnet sind.

2. Halter für einen Getränkebehälter nach Anspruch 2, **dadurch gekennzeichnet, dass** die Gelenke (14) um 90° versetzt am Umfang der Behälteraufnahme (7) angebracht sind.

3. Halter für einen Getränkebehälter nach Anspruch 1, **dadurch gekennzeichnet, dass** der Halter (1) Teil einer Haltevorrichtung (2) für Getränkebehälter (3) ist, die einen Schlitten (5) aufweist, der schubladenartig aus einer eingeschobenen in eine ausgezogenen Stellung verschiebbar geführt ist, wobei in der ausgezogenen Stellung die Behälteraufnahme (7) durch ein Haltering (8) und einen Boden (9) gebildet wird, in das ein Getränkebehälter (3) stellbar ist, und wobei der Haltering (8) durch einen Steuerbügel (17) beim Ausfahren aus einer abgesenkten in eine angehobenen Stellung geführt wird, und wobei die Haltebügel (10) durch Steuerstifte (22), Nocken oder dgl., die sich am Schlitten (5) abstützen, beim Einfahren des Schlittens (5) in den Haltering (8) eingeschwenkt werden.

## Claims

1. Holder for a drinks container (3), having a container receptacle (7) for the drinks container (3) and having a clamping device (10), wherein the holder (1) comprises at least two semi-circular retaining clips (10), which are mounted in the upper region of the container receptacle (7) at a respective one of two radially opposite hinges (14) on the circumference and are resiliently and pivotally mounted, the spring action effecting a pivoting out of the container receptacle (7) opposite to the insertion direction of the drinks container (3) and the pivoting angle being limited in both directions by stop members (15), **characterised in that** the radii of the retaining clips (10) are different and the hinges (14) are arranged offset at the circumference of the container receptacle (7).

2. Holder for a drinks container according to claim 1, **characterised in that** the hinges (14) are mounted offset through 90° at the circumference of the container receptacle (7).

3. Holder for a drinks container according to claim 1, **characterised in that** the holder (1) is part of a holding device (2) for drinks containers (3), which holding device comprises a slide (5), which is slidably guided in the manner of a drawer from an inserted position into a pulled-out position, the container receptacle (7) being formed in the pulled-out position by a retaining ring (8) and a base (9), into which a drinks container (3) can be placed, and the retaining ring (8), during ejection, being guided by a U-shaped control member (17) from a lowered into a raised position, and the retaining clips (10), during insertion of the slide (5), being pivoted into the retaining ring (8) by control pins (22), cams or the like that are supported on the slide (5).

## Revendications

1. Support pour un récipient de boisson (3), avec un réceptacle (7) pour le récipient de boisson (3) et avec un dispositif de serrage (10), sachant que le support (1) présente au moins deux étriers de maintien (10) de forme semi-circulaire qui, dans la région supérieure du réceptacle (7), sur la périphérie, sont disposés et montés à pivotement par effet de ressort chacun sur deux articulations radialement opposées (14), sachant que l'effet de ressort produit un pivotement hors du réceptacle (7) à l'encontre de la direction d'insertion du récipient de boisson (3) et que l'angle de pivotement est limité dans les deux directions par des butées (15),
**caractérisé en ce que** les rayons des étriers de maintien (10) sont différents, et les articulations (14) sont disposées sur la périphérie du réceptacle (7) en étant décalées.

2. Support pour un récipient de boisson selon la revendication 1, **caractérisé en ce que** les articulations (14) sont disposées sur la périphérie du réceptacle (7) en étant décalées de 90°.

3. Support pour un récipient de boisson selon la revendication 1, **caractérisé en ce que** le support (1) fait partie d'un dispositif de maintien (2) pour un récipient de boisson (3) qui présente un coulisseau (5) qui est guidé à coulissement à la manière d'un tiroir d'une position insérée dans une position déployée, sachant que dans la position déployée, le réceptacle (7) est formé par une bague de maintien (8) et un fond (9) dans lequel un récipient de boisson (3) peut être placé, et sachant que la bague de maintien (8) est guidée par un étrier de commande (17) lorsqu'elle est déployée d'une position abaissée dans une position relevée, et sachant que les étriers de maintien (10) sont, lors de l'insertion du coulisseau (5) dans la bague de maintien (8), rentrés par pivotement par des broches de commande (22) ou par des ergots ou analogues qui s'appuient sur le coulisseau (5).
